# FASCICULE DE BREVET EUROPEEN

(11) **EP 2 276 938 B1**
(45) Date de publication et mention de la délivrance du brevet: **24.08.2011**
(21) Numéro de dépôt: 09745946.5
(22) Date de dépôt: 16.04.2009
(51) Int. Cl.: F16B 41/00

(54) **DISPOSITIF DE FIXATION ANTIVOL DE SOLIDARISATION D'UNE ROUE SUR LE MOYEU D'UN VEHICULE AUTOMOBILE**
DIEBSTAHLSICHERUNGSVORRICHTUNG ZUR SICHERUNG EINES RADES AN DER NABE EINES MOTORFAHRZEUGS
ANTI-THEFT FIXING DEVICE FOR SECURING A WHEEL TO THE HUB OF A MOTOR VEHICLE.

(30) Priorité: 23.04.2008 FR 0852723
(43) Date de publication de la demande: 26.01.2011
(73) Titulaire: Société des Forges de Froncles (Société par actions simplifiée), 52320 Froncles (FR)
(72) Inventeur: DA FONSECA, Richard, 52300 Curel (FR); FROELIGER, Alain, F-52320 Froncles (FR)
(74) Mandataire: Rhein, Alain
(86) Numéro de dépôt international: PCT/FR2009/050703
(87) Numéro de publication internationale: WO 2009/138627

(56) Documents cités:
- EP-A- 1 544 483
- US-A1- 2003 165 371

## Description

La présente invention a pour objet un dispositif de fixation antivol de solidarisation d'une roue sur le moyeu d'un véhicule automobile, comportant une partie filetée s'étendant axialement, une partie de maintien destinée à venir se plaquer contre la roue, et une partie d'entraînement, destinée à être enfouie dans un puits de ladite roue, et qui permet la transmission à ladite partie filetée d'un couple de serrage ou de desserrage au travers d'une clé ou analogue, l'accouplement de la clé ou analogue avec ladite partie d'entraînement étant réalisé au travers d'empreintes concordantes que comportent d'une part ladite partie d'entraînement et d'autre part ladite clé ou analogue, les caractéristiques de forme, de dimensions et de disposition desdites empreintes constituant un code.

De manière habituelle la roue d'un véhicule automobile est fixée au moyen de vis dont la tête qui permet la transmission du couple de serrage ou de desserrage est de forme hexagonale.

Afin d'éviter qu'un tiers puisse enlever frauduleusement les roues, il est de plus en plus fréquemment proposé que, pour chacune des roues, au moins l'une des vis présente une tête qui nécessite une clef particulière pour pouvoir être manoeuvrée.

On connaît ainsi de nombreux dispositifs de vis ou analogue munis de moyens de codage, comme par exemple ceux décrits dans les documents GB 2.006.371, FR 2.359.730 et FR 2.567.215 et WO 03/081057. Ces dispositifs comprennent d'une part une vis dont la tête présente soit des encoches périphériques et/ou faciales arrangées angulairement de manière irrégulière, et d'autre part une clef de type douille, munie de pions ou doigts disposés selon le même arrangement et destinés à coopérer avec lesdites encoches en vue de réaliser l'accouplement susceptible de permettre le transfert de couple.

L'inviolabilité de ces dispositifs est accrue lorsque leur tête est enfouie dans un puits étroit, qui interdit sa préhension par une approche latérale de la tête au moyen d'un outil de serrage. Dans ce cas de figure, les tentatives frauduleuses contre ces dispositifs sont pratiquées en force, soit par une attaque axiale et légèrement de biais avec un burin, soit en utilisant une clé présentant un autre code, ou une partie du code, et en la matriçant axialement contre la tête codée.

La présente invention a pour but de proposer un dispositif de fixation antivol qu'il n'est pas possible de forcer par une approche en force de direction axiale.

Le dispositif de fixation antivol de solidarisation d'une roue sur le moyeu d'un véhicule automobile, selon l'invention, comporte une partie filetée, une partie de maintien destinée à venir se plaquer contre l'objet à fixer, et une partie d'entraînement, destinée à être enfouie dans un puits de ladite roue, et qui permet la transmission à ladite partie filetée d'un couple de serrage ou de desserrage au travers d'une clé ou analogue, l'accouplement de la clé ou analogue avec ladite partie d'entraînement étant réalisé au travers d'empreintes concordantes que comportent d'une part ladite partie d'entraînement et d'autre part ladite clé ou analogue, les caractéristiques de forme, de dimensions et de disposition desdites empreintes constituant un code, et il se caractérise essentiellement en ce que ladite partie d'entraînement comporte d'une part un téton cylindrique s'étendant axialement, et d'autre part un insert en forme de manchon qui comporte extérieurement lesdites empreintes permettant l'accouplement d'une clé ou analogue, et qui est enfilé à force axialement sur ledit téton cylindrique en sorte de prendre une première position d'utilisation, tout en étant susceptible de prendre une seconde position où il est engagé plus profondément autour dudit téton cylindrique, et en ce que ledit insert est lié en rotation audit téton cylindrique au travers de moyens de friction, ledit téton cylindrique et ledit insert étant configurés en sorte que dans ladite première position, lesdits moyens de friction sont aptes à permettre d'assurer la transmission dudit couple de serrage ou de desserrage, tandis que dans ladite seconde position, lesdits moyens de friction sont inaptes à permettre la transmission dudit couple.

Les moyens de frictions sont disposés soit sur le téton ou sur l'insert, et selon le cas, respectivement, l'insert ou le téton est configuré pour que dans le cas du passage de l'insert dans la seconde position, les moyens de friction se trouvent, au moins partiellement, en regard d'une zone, évidée par exemple, ne leur permettant pas un accrochage suffisant à la transmission du couple nécessaire au serrage ou au desserrage.

Selon une caractéristique additionnelle du dispositif de fixation antivol selon l'invention, les moyens de friction consistent en des cannelures axiales, s'étendant sur la paroi interne de l'insert, ou sur la paroi extérieure du téton cylindrique.

Selon un mode de réalisation particulier du dispositif de fixation antivol selon l'invention le téton cylindrique présente deux étages de diamètres différents, un premier étage éloigné de la partie de maintien, et un second étage intercalé entre le premier et ladite partie de maintien, ledit second étage étant d'un diamètre inférieur à celui dudit premier étage, tandis que les moyens de friction sont disposés sur la paroi interne de l'insert.

Selon un autre mode de réalisation particulier du dispositif de fixation antivol selon l'invention le téton cylindrique présente un diamètre constant et comporte extérieurement les moyens de friction disposés à une certaine distance de sa base, tandis que l'insert présente intérieurement deux étages de diamètres différents, un premier étage, du côté de l'orifice d'engagement sur ledit téton, et un second, de l'autre côté, ce dernier étant d'un diamètre supérieur à celui de l'autre étage.

Selon une autre caractéristique additionnelle du dispositif de fixation antivol selon l'invention, l'insert comporte extérieurement une collerette dans laquelle sont réalisées les empreintes.

Selon une autre caractéristique additionnelle du dispositif de fixation antivol selon l'invention, la collerette s'étend à proximité de l'orifice d'engagement sur le téton.

Selon une autre caractéristique additionnelle du dispositif de fixation antivol selon l'invention, l'insert est d'une hauteur au moins égale à celle du téton cylindrique.

Les avantages et les caractéristiques du dispositif de fixation antivol selon l'invention, ressortiront plus clairement de la description qui suit et qui se rapporte au dessin annexé, lequel en représente un mode de réalisation non limitatif.

Dans le dessin annexé :
- la figure 1 représente une vue schématique en perspective et en éclaté d'un dispositif de fixation antivol selon l'invention.
- la figure 2a représente une vue schématique en coupe axiale d'un dispositif de fixation antivol selon l'invention, en situation d'utilisation.
- la figure 2b représente la même vue, après une tentative de forçage.
- la figure 3a représente une vue schématique partielle d'un détail de la figure 2a.
- la figure 3b représente une vue schématique partielle d'un détail de la figure 2b.

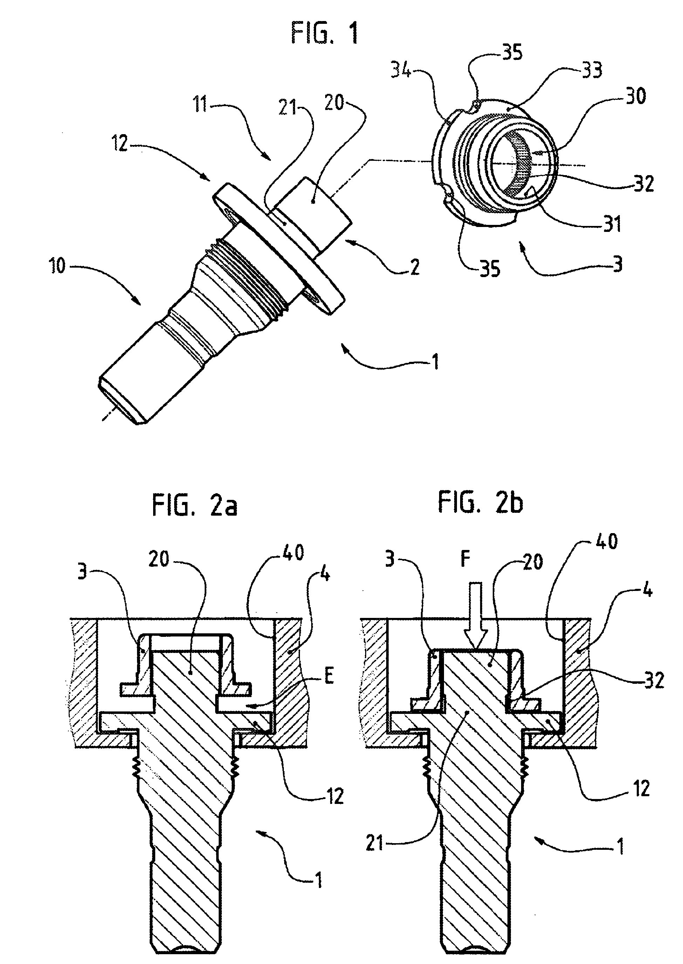

En référence à la figure 1, on peut voir un dispositif de fixation antivol selon l'invention, se présentant sous la forme d'une vis 1. Il comporte une partie distale 10 destinée à être vissée dans un trou taraudé du moyeu, et une partie proximale 11 destinée à permettre son manoeuvrement en rotation axiale.

Les parties distale 10 et proximale 11 sont séparées par une partie intermédiaire 12 qui présente la forme d'un disque destiné à réaliser le maintien de l'objet à fixer, en l'occurrence la jante d'une roue.

Selon l'invention, la partie proximale 11 comprend un téton cylindrique 2 qui fait saillie axialement de face supérieure de la partie intermédiaire 12, et qui dans ce mode de réalisation présente deux étages de diamètres différents, à savoir un étage extrême 20, et au niveau de sa base, c'est-à-dire dans sa zone de jonction avec la partie intermédiaire 12 en forme de disque, un étage 21 d'un diamètre inférieur à celui de l'étage 20.

La partie proximale 11 comprend également un insert 3 se présentant sous la forme d'un manchon, qui comporte une ouverture 30 lui permettant d'être engagé sur le téton cylindrique 2.

La paroi intérieure 31 de l'insert 3 comporte périphériquement des cannelures axiales 32, dimensionnées en sorte de permettre de lier en rotation l'insert 3 au téton cylindrique 2.

L'insert 3 est ainsi destiné à être assujetti à force sur le téton cylindrique 2, et plus particulièrement sur l'étage 20 de ce dernier, en y étant maintenu au travers des cannelures 32. Par ailleurs, l'insert 3 comporte extérieurement une collerette 33 dans le bord 34 de laquelle sont pratiquées des encoches 35, qui permettent l'adaptation d'un outil de manoeuvrement en pivotement de l'insert 3 et donc de la vis 1.

De manière connue en soi, les dimensions des encoches 35, et leur disposition sur le pourtour de la collerette 33, définissent une empreinte qui constitue un code.

En référence maintenant à la figure 2a, on peut voir une vis 1 selon l'invention, engagée dans le puits 40 d'une jante 4.

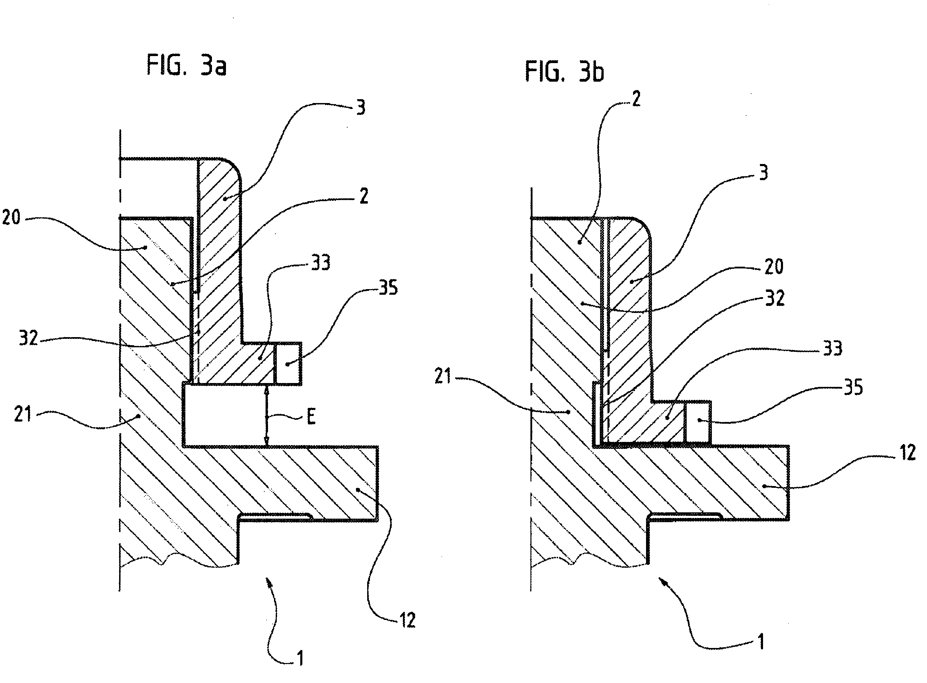

Comme on peut également le voir sur la figure 3a, l'insert 3 est serti sur l'étage 20 du téton cylindrique 2, en laissant subsister un espace E entre l'insert 3 et la face supérieure de la partie intermédiaire 12.

Dans cette configuration, les cannelures 32 assurent suffisamment de friction pour permettre, lors du manoeuvrement en rotation de l'insert 3, la transmission du couple nécessaire au serrage ou au desserrage de la vis 1.

En référence maintenant aux figures 2b et 3b, on peut voir que lors d'une tentative de forçage du dispositif générant un effort axial F sur l'insert 3, ce dernier est repoussé contre la partie intermédiaire 12 et est positionné sur l'étage 21 du téton 2, en sorte que les cannelures 32 ne soient que partiellement en contact avec le téton 2, et plus particulièrement l'étage 20, limitant ainsi la friction entre les deux éléments, et interdisant la transmission d'un couple de desserrage.

On notera que dans ce mode de réalisation particulière, les cannelures 32 s'étendent sur une hauteur supérieure à la hauteur de l'étage 21, en sorte que demeure un contact entre elles et l'étage 20, assurant ainsi un maintien de l'insert 3.

On notera également que selon une variante, les moyens de friction sont disposés sur le téton 2, tandis que la paroi 31 de l'insert 3 présente deux étages de diamètres différents. Cette variante présente toutefois l'inconvénient qu'en cas d'enlèvement de l'insert 3, les moyens de friction du téton 2 favorisent l'agrippement de ce dernier au moyen d'un outil de serrage.

La forme et le dimensionnement de l'insert 3, ainsi que le positionnement de la collerette 33 dans le fond d'un puits 40 rendent impossible l'utilisation de clés multi-picots, généralement utilisées pour forcer les vis à code.

On notera que les dimensions de l'insert 3, et plus particulièrement celles diamétrales de la collerette 33, sont choisies en fonction des dimensions diamétrales du puits 40, en sorte de ne pas permettre le passage d'un outil d'extraction.

Dans le cas d'utilisation d'un burin ou tout autre outil coupant, l'insert 3 peut être découper ou casser, et le couple ne peut plus être transmis.

Enfin, comme vu précédemment, en cas de forçage axial de l'insert 3, au moyen d'une clé de code voisin, matricée par martelage, l'insert 3 s'enfonce sur le téton 2 interdisant la transmission du couple de desserrage.

On notera que de préférence, l'insert 3 est d'une hauteur égale à celle du téton 2, ce qui, lorsque l'insert 3 est enfoncé sur le téton 2, interdit le saisissement de ce dernier au moyen d'un outil de serrage.

## Revendications

1. Dispositif de fixation antivol de solidarisation d'une roue sur le moyeu d'un véhicule automobile, comportant une partie filetée (10) s'étendant axialement, une partie de maintien (12) destinée à venir se plaquer contre la roue (4), et une partie d'entraînement (2, 3), destinée à être enfouie dans un puits (40) de ladite roue (4), et qui permet la transmission à ladite partie filetée (10) d'un couple de serrage ou de desserrage au travers d'une clé ou analogue, l'accouplement de la clé ou analogue avec ladite partie d'entraînement (2, 3) étant réalisé au travers d'empreintes concordantes (35) que comportent d'une part ladite partie d'entraînement (2, 3) et d'autre part ladite clé ou analogue, les caractéristiques de forme, de dimensions et de disposition desdites empreintes constituant un code, **caractérisé en ce que** ladite partie d'entraînement comporte d'une part un téton cylindrique (2) s'étendant axialement, et d'autre part un insert (3) en forme de manchon qui comporte extérieurement lesdites empreintes (35) permettant l'accouplement d'une clé ou analogue, et qui est enfilé à force axialement sur ledit téton cylindrique (2) en sorte de prendre une première position d'utilisation, tout en étant susceptible de prendre une seconde position où il est engagé plus profondément autour dudit téton cylindrique (2), et **en ce que** ledit insert (3) est lié en rotation audit téton cylindrique (2) au travers de moyens de friction (32), ledit téton cylindrique (2) et ledit insert (3) étant configurés en sorte que dans ladite première position, lesdits moyens de friction (32) sont aptes à permettre d'assurer la transmission dudit couple de serrage ou de desserrage, tandis que dans ladite seconde position, lesdits moyens de friction (32) sont inaptes à permettre la transmission dudit couple.

2. Dispositif de fixation antivol selon la revendication 1, **caractérisé en ce que** les moyens de friction (32) consistent en des cannelures axiales, s'étendant sur la paroi interne de l'insert (3), ou sur la paroi extérieure du téton cylindrique (2).

3. Dispositif de fixation antivol selon la revendication 1 ou la revendication 2, **caractérisé en ce que** le téton cylindrique (2) présente deux étages de diamètres différents, un premier étage (20) éloigné de la partie de maintien (12), et un second étage (21) intercalé entre le premier (20) et ladite partie de maintien (12), ledit second étage (21) étant d'un diamètre inférieur à celui dudit premier étage (20), tandis que les moyens de friction (32) sont disposés sur la paroi interne de l'insert (3).

4. Dispositif de fixation antivol selon la revendication 1 ou la revendication 2, **caractérisé en ce que** le téton cylindrique (2) présente un diamètre constant et comporte extérieurement les moyens de friction disposés à une certaine distance de sa base, tandis que l'insert (3) présente intérieurement deux étages de diamètres différents, un premier étage, du côté de l'orifice d'engagement sur ledit téton (2), et un second, de l'autre côté, ce dernier étant d'un diamètre supérieur à celui de l'autre étage.

5. Dispositif de fixation antivol selon l'une quelconque des revendications précédentes, **caractérisé en ce que** l'insert (3) comporte extérieurement une collerette (33) dans laquelle sont réalisées les empreintes (35).

6. Dispositif de fixation antivol selon la revendication 5, **caractérisé en ce que** la collerette (33) s'étend à proximité de l'orifice d'engagement sur le téton (2).

## Claims

1. Anti-theft fixing device for securing a wheel to the hub of a motor vehicle, including an axially extending threaded portion (10), a holding portion (12) aimed at being applied against the wheel (4), and a driving portion (2, 3) aimed at being inserted into a well (40) of said wheel (4), and which permits the transmission to said threaded portion (10) of a clamping or unclamping torque through a key or the like, the coupling of the key or the like with said driving portion (2, 3) being brought about through matching indentations (35), which, on the one hand, said driving portion (2, 3) and, on the other hand, said key or the like include, the characteristics of shape, sizes and arrangement of said indentations forming a code, wherein said driving portion includes, on the one hand, an axially extending cylindrical stud (2) and, on the other hand, an insert (3) in the form of a sleeve, which externally includes said indentations (35) permitting the coupling of a key or the like, and which is inserted by force axially onto said cylindrical stud (2) so as to adopt a first position of use, while being capable of adopting a second position, in which it is inserted deeper about said cylindrical stud (2), and wherein said insert (3) is connected in rotation to the cylindrical stud (2) through friction means (32), said cylindrical stud (2) and said insert (3) being so configured that in said first position said friction means (32) are capable of permitting to ensure the transmission of said clamping or unclamping torque, while in said second position said friction means (32) are not capable of permitting the transmission of said torque.

2. Anti-theft fixing device according to claim 1, wherein the friction means (32) consist of axial grooves, which extend on the inner wall of the insert (3) or on the outer wall of the cylindrical stud (2).

3. Anti-theft fixing device according to claim 1 or claim 2, wherein the cylindrical stud (2) hast two stages with different diameters - a first stage (20) away from the holding portion (12), and a second stage (21) intercalated between the first stage (20) and said holding portion (12), said second stage (21) having a diameter smaller than that of the first stage (20), while the friction means (32) are arranged on the inner wall of the insert (3).

4. Anti-theft fixing device according to claim 1 or claim 2, wherein the cylindrical stud (2) has a constant diameter and externally includes the friction means arranged at a certain distance from its base, while the insert (3) has on the inner side two stages with different diameters - a first stage on the side of the opening for insertion onto said stud (2) and a second stage on the other side, the latter having a diameter larger than that of the other stage.

5. Anti-theft fixing device according to any of the preceding claims, wherein the insert (3) externally includes a collar (33), in which the indentations (35) are provided for.

6. Anti-theft fixing device according to claim 5, wherein the collar (33) extends proximate the opening for insertion onto the stud (2).

## Patentansprüche

1. Befestigungsvorrichtung gegen Diebstahl zum festen Verbinden eines Rades mit der Nabe eines Kraftfahrzeugs, umfassend einen Gewindeteil (10), der sich axial erstreckt, einen haltenden Teil (12), vorgesehen, um sich gegen das Rad (4) zu pressen, und einen Antriebsteil (2, 3), vorgesehen, um in eine Versenkung (40) des besagten Rades (4) eingeschoben zu werden, und der dem besagten Gewindeteil (10) die Übertragung eines Festspann- oder Entspannungsmoments durch einen Schlüssel oder dergleichen erlaubt, wobei die Kupplung des Schlüssels oder dergleichen mit dem besagten Antriebsteil (2, 3) mittels übereinstimmender Prägungen (35) bewerkstelligt ist, welche, einerseits, der besagte Antriebsteil (2, 3) und, andererseits, der besagte Schlüssel oder dergleichen umfassen, wobei die Charakteristiken der Form, der Abmessungen und der Anordnung der besagten Prägungen einen Code bilden, **dadurch gekennzeichnet, dass** der besagte Antriebsteil einerseits einen zylindrischen Mittelzapfen (2) umfasst, der sich axial erstreckt, und, andererseits, ein Einsatzstück (3) in Form von einer Muffe umfasst, das äußerlich die besagten Prägungen (35) umfasst, die der Kupplung eines Schlüssels oder dergleichen erlauben, und das mit Kraft axial auf den besagten zylindrischen Mittelzapfen (2) so aufgeschoben wird, um eine erste Benutzungsstellung einzunehmen, während es allerdings imstande ist, eine zweite Stellung einzunehmen, in welcher es den besagten zylindrischen Mittelzapfen (2) noch tiefer herum erfasst, und **dadurch**, **dass** das besagte Einsatzstück (3) drehfest mit dem zylindrischen Mittelzapfen (2) durch Reibungsmittel (32) verbunden ist, wobei der besagte zylindrische Mittelzapfen (2) und das besagte Einsatzstück (3) derart konfiguriert sind, dass die besagten Reibungsmittel (32) in der besagten ersten Position geeignet sind, um zu erlauben, die Übertragung des besagten Festspann- oder Entspannungsmoments sicherzustellen während die besagten Reibungsmittel (32) in der besagten zweiten Position nicht imstande sind, die Übertragung des besagten Drehmoments zu erlauben.

2. Befestigungsvorrichtung gegen Diebstahl nach Anspruch 1, **dadurch gekennzeichnet, dass** die Reibungsmittel (32) aus Axialnuten bestehen, die sich auf der inneren Wand des Einsatzstücks (3) oder auf der Außenwand des zylindrischen Mittelzapfens (2) erstrecken.

3. Befestigungsvorrichtung gegen Diebstahl nach Anspruch 1 oder Anspruch 2, **dadurch gekennzeichnet, dass** der zylindrische Mittelzapfen (2) zwei Stufenbereiche mit unterschiedlichen Durchmessern aufweist - einen ersten Stufenbereich (20), der von dem haltenden Teil (12) entfernt ist, und einen zweiten Stufenbereich (21), der zwischen dem ersten Stufenbereich (20) und dem besagten haltenden Teil (12) eingefügt ist, wobei der besagte zweite Stufenbereich (21) einen Durchmesser, der kleiner ist als jener des ersten Stufenbereichs (20) aufweist, wohingegen die Reibungsmittel (32) auf der inneren Wand des Einsatzstücks (3) angeordnet sind.

4. Befestigungsvorrichtung gegen Diebstahl nach Anspruch 1 oder Anspruch 2, **dadurch gekennzeichnet, dass** der zylindrische Mittelzapfen (2) einen gleichbleibenden Durchmesser aufweist und äußerlich die Reibungsmittel umfasst, die in einer gewissen Entfernung von seinem Unterteil angeordnet sind, wohingegen das Einsatzstück (3) innerlich zwei Stufenbereiche mit unterschiedlichen Durchmessern aufweist - einen ersten Stufenbereich auf der Seite der Öffnung zum Eingreifen auf den besagten Mittelzapfen (2) und einen zweiten Stufenbereich auf der anderen Seite, wobei dieser letztere einen größeren Durchmesser als jener des anderen Stufenbereichs aufweist.

5. Befestigungsvorrichtung gegen Diebstahl nach irgendeinem der vorgehenden Ansprüche, **dadurch gekennzeichnet, dass** das Einsatzstück (3) äußerlich einen Kragen (33) umfasst, in welchem die Prägungen (35) ausgeführt sind.

6. Befestigungsvorrichtung gegen Diebstahl nach Anspruch 5, **dadurch gekennzeichnet, dass** der Kragen (33) sich nahe bei der Öffnung zum Eingreifen auf den Mittelzapfen (2) erstreckt.
